# EUROPÄISCHE PATENTSCHRIFT

(11) **EP 2 151 578 B1**
(45) Veröffentlichungstag und Bekanntmachung des Hinweises auf die Patenterteilung: **18.09.2019**
(21) Anmeldenummer: 08013958.7
(22) Anmeldetag: 04.08.2008
(51) Int. Cl.: F04D 15/00, F24D 17/00

(54) **Umwälzpumpenaggregat**
Circulation pump system
Agrégat de pompe de recirculation

(43) Veröffentlichungstag der Anmeldung: 10.02.2010
(73) Patentinhaber: Grundfos Management A/S, 8850 Bjerringbro (DK)
(72) Erfinder: Jensen, Kim Hulegaard, 8840 Rodkaersbro Elsborg (DK)
(74) Vertreter: Patentanwälte Vollmann Hemmer Lindfeld Partnerschaft mbB

(56) Entgegenhaltungen:
- EP-A- 1 209 364
- EP-A- 1 355 212
- EP-A1- 0 735 273
- EP-A2- 0 945 620
- US-A- 6 139 281
- US-A1- 2002 059 841
- US-A1- 2004 182 439
- US-A1- 2007 000 660
- US-A1- 2008 179 416

## Beschreibung

Die Erfindung betrifft eine Heizungs- und/oder Klimaanlage mit einem solchen Pumpenaggregat.

In Heizungs- und Klimaanlagen, insbesondere in größeren Anlagen, sind üblicherweise zahlreiche Umwälzpumpen vorhanden. Zur zentralen Steuerung der Pumpen ist üblicherweise eine zentrale Steuereinheit vorgesehen, die mit den einzelnen Pumpen über Kabel verbunden ist. Darüber hinaus können in der Anlage auch noch Sensoren vorgesehen sein, welche wiederum mit Kabeln mit der zentralen Steuereinrichtung verbunden sind.

US 2008/0179416 A1 offenbart ein Kontrollsystem für eine komplexe Heizungsanlage, welche mehrere Boiler und Umwälzpumpen aufweist. Alle Komponenten werden von einer zentralen Steuereinheit gesteuert. Hierzu ist eine aufwendige elektrische Verdrahtung des gesamten Heizungssystems erforderlich.

Insbesondere bei solchen Heizungsanlagen mit thermischen Solarkollektoren sind aufwendige Verdrahtungen erforderlich, da die einzelnen Anlagenkomponenten weit auseinander liegen. Die Solarkollektoren sind üblicherweise auf dem Dach eines Gebäudes angeordnet, während die Heizungsanlage und die Steuereinheit üblicherweise im Keller angeordnet sind. Um die zur Verfügung stehende Wärmemenge der Solaranlage richtig berücksichtigen zu können, müssen an den Solarkollektoren entsprechende Sensoren vorgesehen sein, welche der Steuerung der Umwälzpumpen die zur Verfügung stehende Wärmeleistung melden.

Es ist daher Aufgabe der Erfindung, einen vereinfachten Aufbau bzw. eine vereinfachte Installation einer Heizungs- und/oder Klimaanlage zu ermöglichen.

Diese Aufgabe wird durch eine Heizungs- und/oder Klimaanlage mit den im Anspruch 1 angegebenen Merkmalen gelöst. Bevorzugte Ausführungsformen ergeben sich aus den zugehörigen Unteransprüchen, der nachfolgenden Beschreibung sowie den beigefügten Figuren.

Die Erfindung betrifft eine Heizungs- und/oder Klimaanlage, welche zumindest ein Umwälzpumpenaggregat gemäß der nachfolgenden Beschreibung aufweist. Eine solche Heizungs- und/oder Klimaanlage kann jedoch auch mehrere derartige Umwälzpumpenaggregate aufweisen.

Das Umwälzpumpenaggregat in der erfindungsgemäßen Heizungs- und/oder Klimaanlage ist wie bekannte Umwälzpumpenaggregate mit einem elektrischen Antriebsmotor versehen sowie einer Steuereinrichtung zum Steuern des Antriebsmotors. Die Steuereinrichtung kann insbesondere einen Frequenzumrichter zur Drehzahlsteuerung des Antriebsmotors aufweisen. Erfindungsgemäß weist die Steuereinrichtung darüber hinaus eine Kommunikationsschnittstelle auf, welche zur Verbindung mit zumindest einem externen Sensor und/oder zumindest einem weiteren von der Steuereinrichtung zur steuernden Aggregat ausgebildet ist. Bevorzugt ist die Steuereinrichtung so ausgebildet, dass sie die Funktion einer externen Steuereinheit, wie sie in bekannten Anlagen verwendet wird, übernehmen kann. Auf diese Weise entfällt der Verdrahtungsaufwand zwischen der Pumpe und der externen Steuereinheit, da die gesamte Steuereinrichtung in das Umwälzpumpenaggregat integriert ist. Die Kommunikationsschnittstelle ermöglicht es dabei der Steuereinrichtung, mit weiteren Anlagenkomponenten zu kommunizieren, insbesondere mit weiteren zu steuernden bzw. zu regelnden Aggregaten. D.h., die Steuereinrichtung eines Umwälzpumpenaggrates bzw. einer Pumpe kann gleichzeitig die Steuerung bzw. Regelung weiterer Aggregate übernehmen, wie es in bekannten Anlagen eine externe Steuereinheit macht. Darüber hinaus können über die Kommunikationsschnittstelle Sensoren angeschlossen werden, welche die Steuereinrichtung mit Anlagenparametern versorgt, um die Pumpe in Abhängigkeit dieser Parameter steuern zu können.

Durch die Integration einer solchen Steuereinrichtung, welche zur Steuerung bzw. Kommunikation mit weiteren Anlagenteilen ausgebildet ist, in ein Umwälzpumpenaggregat wird der Installations- und Verdrahtungsaufwand in der Heizungs- bzw. Klimaanlage deutlich vereinfacht.

Bevorzugt ist die Kommunikationsschnittstelle zur drahtlosen Signalübertragung, insbesondere mittels Funk ausgebildet. Hierdurch wird die Installation noch weiter vereinfacht, da eine Verdrahtung zwischen den einzelnen Anlagenkomponenten, welche von der Steuereinrichtung des Umwälzpumpenaggregates zu Steuern sind, entfallen kann. Darüber hinaus können auch mögliche Sensoren mit Schnittstellen zur drahtlosen, insbesondere Funkübertragung versehen sein, sodass auch die Sensoren drahtlos mit der Steuereinrichtung des Umwälzpumpenaggregates kommunizieren können. So kann beispielsweise in einer Solaranlage ein auf dem Dach angeordneter Temperaturfühler über Funk mit dem Pumpenaggrat im Keller des Gebäudes kommunizieren. Dies vereinfacht die Installation erheblich. Die Kommunikationsschnittstelle wird bevorzugt so ausgebildet bzw. mit einem Protokoll zur Datenübertragung versehen, welches eine eindeutige Kopplung mit anderen Kommunikationsmodulen bzw. Anlagenteilen ermöglicht, sodass eine sichere Kommunikation zwischen den einzelnen Anlagenteilen möglich ist.

Weiter bevorzugt ist die Steuereinrichtung derart ausgebildet, dass der Antriebsmotor von der Steuereinrichtung in Abhängigkeit von über die Kommunikationsschnittstelle empfangenen Daten steuerbar ist. Diese Daten können beispielsweise von Sensoren, insbesondere Temperatur- und Strömungssensoren empfangen werden. Beispielsweise kann die Steuereinrichtung Temperaturdaten von einem Solarkollektor oder Wasserspeicher erhalten und in Abhängigkeit der dort zur Verfügung stehenden Wassertemperaturen zugehörigen Umwälzpumpen und Ventile steuern. Insbesondere kann die Umwälzpumpe, in welche die Steuereinrichtung integriert ist, gesteuert werden. Darüber hinaus können jedoch auch weitere Umwälzpumpen über die Kommunikationsschnittstelle gesteuert werden, wie nachfolgend näher beschrieben wird,

Gemäß einer weiteren bevorzugten Ausführungsform ist die Steuereinrichtung derart ausgebildet, dass sie über die Kommunikationsschnittstelle Daten an ein externes Aggregat senden kann, welches in Abhängigkeit dieser Daten gesteuert wird. Das externe Aggregat kann beispielsweise eine weitere Pumpe oder ein Ventil sein oder beispielsweise auch eine Kesselsteuerung einer Heizungsanlage. Die Steuereinrichtung des Umwälzpumpenaggregates kann hier somit über das Kommunikationsmodul Rückmeldungen an andere Anlagenteile geben oder auch andere Anlagenteile mitsteuern, sodass das Umwälzpumpenaggregat mit der integrierten Steuereinrichtung, wie sie vorangehend beschrieben wurde, die Funktion einer bisher vorgesehen externen Steuereinheit für die Pumpensteuerung übernehmen kann. Dazu kann sie an diese anderen Anlagenteile bzw, Aggregate Steuerdaten z.B. zum Ein- und Ausschalten senden.

Weiter bevorzugt ist die Steuereinrichtung daher derart ausgebildet, dass sie über die Kommunikationsschnittstelle zumindest eine weitere Pumpe und/oder ein externes Ventil steuern kann und/oder Daten von diesen, d.h. einer externen Pumpe und/oder einem externen Ventil, empfangen kann. So kann die Steuereinrichtung über die Kommunikationsschnittstelle weitere Pumpen ein- oder ausschalten oder auch ggf. in deren Drehzahl regeln, insbesondere in Abhängigkeit von aktuellen Anlagenparametern, welche beispielsweise von Sensoren ebenfalls über die Kommunikationsschnittstelle empfangen werden. Auch können Ventile geöffnet oder geschlossen werden, beispielsweise Mischerventile oder ähnliche. Die weiteren Pumpen und/oder Ventile sind dazu mit entsprechenden Kommunikationsschnittstellen und angepassten Steuer- bzw. Regeleinrichtungen ausgerüstet, welche diese Bauteile in Abhängigkeit der von der Haupt-Umwälzpumpe empfangenen Signale bzw. Steuerdaten steuert bzw. einstellt. Besonders bevorzugt kann es sich bei einem externen Ventil um ein Mehrwege- und/oder Proportionalventil handeln.

Darüber hinaus können die externen von der Steuereinrichtung des Pumpenaggregates zu steuernden weiteren Pumpen und/oder Ventile so ausgebildet sein, dass sie Daten an die Steuereinrichtung des Haupt-Umwälzpumpenaggregates senden können. Dazu sind diese externen Aggregate mit geeigneten Kommunikationsschnittstellen versehen. So können in den externen Aggregaten, d.h. Ventilen oder weiteren Pumpen Anlagenparameter erfasst und an die zentrale Steuereinrichtung in einer der Umwälzpumpen gemeldet werden. Darüber hinaus können Betriebszustände der einzelnen Aggregate, beispielsweise Ventilstellungen oder Pumpendrehzahlen über die Kommunikationsschnittstellen an die Steuereinrichtung, welche die zentrale Anlagensteuerung übernimmt, übertragen werden. Diese Steuereinrichtung empfängt die Daten über ihr zugehöriges Kommunikationsmodul,

Gemäß einer besonders bevorzugten Ausführungsform ist die Steuereinrichtung mit einem Repeater zum Empfang und zum Weitersenden von Signalen versehen. Auch weitere Anlagenteile, welche mit Kommunikationsschnittstellen ausgestattet sind, beispielsweise Sensoren, Ventile oder weiteren Pumpen können bevorzugt zusätzlich solche Repeater z.B. in ihren Kommunikationsmodulen enthalten. Die Repeater sind insbesondere für die drahtlose Signalübertragung, z.B. über Funk vorgesehen. Mittels solcher Repeater in den einzelnen Anlagenbauteilen können sehr leicht Vernetzungen über große Entfernungen aufgebaut werden. So können Entfernungen überbrückt werden, für welche die normale Sendeleistung der Kommunikationsmodule nicht ausreichen würde. Beispielsweise kann ein Signal von einem Temperatursensor auf dem Dach zunächst von einem Kommunikationsmodul in einem Ventil oder in einer weiteren Pumpe empfangen werden und dann ggf. verstärkt weitergesendet werden an das Kommunikationsmodul der Steuereinrichtung, welche die Anlagensteuerung übernimmt. Bevorzugt sind die Kommunikationsmodule der einzelnen Aggregate bzw. Anlagenteile so ausgebildet, dass sie den optimalen Weg für die Datenübertragung selbst einstellen, d.h., dass die Kette von Repeatern, über welche die Signale übertragen werden, nicht manuell festgelegt werden muss, sondern dass sich die Signal in dem von den einzelnen Aggregaten mit deren Kommunikationsmodulen gebildeten Netzwerk ihren Weg selbsttätig suchen.

Gemäß einer besonderen Ausführungsform ist die Steuereinrichtung aus zumindest einem austauschbar oder optional in das Umwälzpumpenaggregat integrierbaren Modul gebildet. Dies ermöglicht eine kostengünstigere Herstellung des Umwälzpumpenaggregates. So kann der Teil der Steuereinrichtung, welcher für die Anlagensteuerung, d.h. Steuerung weiterer Aggregate zuständig ist und das Kommunikationsmodul aufweist, als optional in die Umwälzpumpe integrierbares Modul ausgebildet werden. D.h., ein und dieselbe Umwälzpumpe kann mit diesem zusätzlichen Steuermodul oder ohne dieses zusätzliche Steuermodul ausgestattet werden. Wenn das Umwälzpumpenaggregat ohne dieses zusätzliches Steuermodul ausgebildet ist, weist es nur die herkömmliche Steuereinrichtung, welche zur normalen Steuerung bzw. der Regelung des Antriebsmotors, beispielsweise Drehzahlsteuerung, erforderlich ist, auf. Auch ist es denkbar ein Steuermodul vorzusehen, welches die Anlagensteuerung vornehmen kann, und ein weiteres optionales Modul vorzusehen, welches als Empfangsmodul ausgebildet ist und in derartige Umwälzpumpen integriert ist, welche als abhängige (Slave) Pumpen fungieren, d.h. welche von einem anderen Umwälzpumpenaggregat gesteuert werden. So können die Pumpen auf einfache Weise für unterschiedliche Zwecke eingesetzt werden, indem einfach die entsprechenden Module für die Steuerung und Kommunikation integriert werden. Diese austauschbaren Steuer- bzw. Kommunikationsmodule können neben den elektronischen Komponenten zur Steuerung, zur Datenübertragung etc. zusätzlich noch Eingabe und Anzeigeelemente aufweisen. Insbesondere dasjenige Steuermodul, welches zur zentralen Steuerung weitere Anlagenteile vorgesehen ist, weist vorzugsweise Eingabe- und Anzeigemittel zur Einstellung der Anlage bzw. des Systems auf. Zusätzlich kann auch eine Schnittstelle zum Anschluss von Programmier- und Einstelleinrichtungen, beispielsweise zur Verbindung mit einem Computer zur Programmierung der Steuereinrichtung vorgesehen sein, z.B. eine USB-Schnittstelle oder ein Netzwerkanschluss. Auch der oben genannte Repeater kann als optionales Modul zur Verfügung gestellt werden. So ist es möglich, nur in einige der Anlagenteile entsprechende Repeater zu integrieren, d.h., dort wo sie tatsächlich benötigt werden. Alternativ ist es jedoch auch denkbar derartige Repeater fest in die Kommunikationsmodule zu integrieren.

Bevorzugt weist die Heizungs- und/oder Klimaanlage zumindest einen Sensor, insbesondere einen Temperatursensor auf, welcher mit der Kommunikationsschnittstelle des beschriebenen Umwälzpumpenaggregates zur Datenübertragung verbunden ist, und der Antriebsmotor des Umwälzpumpenaggregates ist von dessen Steuereinrichtung in Abhängigkeit der von dem Sensor übertragenen Daten steuerbar. Der Sensor weist dazu ein korrespondierendes Kommunikationsmodul auf. Die Kommunikationsmodule können beispielsweise zur drahtlosen Datenübertragung, insbesondere per Funk ausgebildet sein. Alternativ ist jedoch auch eine drahtgebundene Kommunikation möglich. Die Steuereinrichtung des Umwälzpumpenaggregates kann den Antriebsmotor in Abhängigkeit des empfangenen Signals von dem Sensor beispielsweise ein- oder ausschalten oder auch in der Drehzahl steuern, bzw, regeln.

Bevorzugt ist der Sensor ein Temperatursensor, welcher an zumindest einem Solarkollektor und/oder einem Wasserspeicher angeordnet ist. So kann beispielsweise die beschriebene Umwälzpumpe im Kreislauf zu dem Solarkollektor angeordnet sein und von der Steuereinrichtung so gesteuert werden, dass in Abhängigkeit der von dem Temperatursensor an dem Solarkollektor erfassten Temperatur die Drehzahl des Antriebsmotors verändert wird und/oder das Umwälzpumpenaggregat ein- oder ausgeschaltet wird. Eine entsprechende Steuerung wäre im Kreislauf zu einem Wasserspeicher möglich. Dabei ist es denkbar, dass in mehreren unterschiedlichen Kreisläufen Umwälzpumpenaggregate mit geeigneten Steuereinrichtungen und Kommunikationsschnittstellen vorgesehen sind, wobei eine der Umwälzpumpen die zentrale Steuerfunktion übernimmt und die anderen Umwälzpumpenaggregate über die Kommunikationsschnittelle steuert, d.h. deren Drehzahl vorgibt und/oder das Ein- und Ausschalten der zugehörigen Antriebsmotoren veranlasst.

Die Kommunikationsschnittstelle des Umwälzpumpenaggregates ist bevorzugt zur drahtlosen Signalübertragung ausgebildet und die Sensoren und/oder Aggregate, welche zur Kommunikation mit der Kommunikationsschnittstelle vorgesehen sind, sind mit korrespondierenden Schnittstellen zur drahtlosen Signalübertragung ausgestattet. So kann eine einfache Kommunikation zwischen den verschiedenen Anlagenteilen. bzw. Aggregaten erreicht werden, welche ohne aufwendige Verdrahtung und Installationsmaßnahmen in Betrieb genommen werden kann.

Bevorzugt ist zumindest ein Teil der Sensoren und/oder Aggregate jeweils mit einem Repeater zum Empfang und zum Weitersenden von Signalen ausgestattet. So können die einzelnen Anlagenkomponenten gleichzeitig dazu dienen, die gesamte Reichweite des so aufgebauten Funknetzwerkes zu erhöhen, da über die Repeater Daten von einem Sensor bzw. Aggregat zum anderen weitergeleitet werden können und so insbesondere der Steuereinrichtung des Haupt-(Master-)-Pumpenaggregates zugeführt werden. Umgekehrt können Steuersignale des Haupt-Pumpenaggregates auf diese Weise an andere Aggregate und Anlagenteile weitergeleitet werden.

In der Heizungs- und/oder Klimaanlage bildet das oben beschriebene Umwälzpumpenaggregat eine Haupt-(Master-)-Pumpe, welche über die Kommunikationsschnittstelle mit zumindest einer Neben-(Slave-)Pumpe zur Datenübertragung verbunden ist, wobei die Neben-Pumpe eine Steuereinrichtung aufweist, welche zur Steuerung der Neben-Pumpe in Abhängigkeit von Daten ausgebildet ist, welche sie von der Haupt-Pumpe empfängt. Die Neben-Pumpe weist eine zu der Kommunikationsschnittstelle der Haupt-Pumpe korrespondierende Schnittstelle zum Datenaustausch auf, insbesondere eine Schnittstelle zur drahtlosen Signalübertragung, wie vorangehend beschrieben. Die Steuereinrichtung der Neben-Pumpe kann ein spezielles Steuermodul sein, welches speziell an die Funktionen, welche für die Neben-Pumpe erforderlich sind, angepasst ist. Alternativ kann die Steuereinrichtung bzw. das Steuermodul auch identisch zu der Steuereinrichtung der Haupt-Pumpe ausgebildet sein und die unterschiedliche Funktion nur durch andere Einstellung der Steuereinrichtung realisiert werden. D.h., in diesem Fall kann ein universelles Steuermodul vorgesehen sein, unabhängig davon, welche Funktion die Umwälzpumpe in der Heizungsanlage übernimmt, d.h. ob sie Haupt- oder Neben-Pumpe ist. Bevorzugt können jedoch unterschiedliche Steuermodule vorgesehen sein, welche wie oben beschrieben modular in ein Umwälzpumpenaggregat eingesetzt werden können, um das Umwälzpumpenaggregat an seinen jeweiligen Einsatzzweck anzupassen.

Die Haupt-Pumpe ist, wie bereits oben beschrieben, so ausgestaltet, dass deren Steuereinrichtung die Funktion einer zentralen Steuereinrichtung, vorzugsweise für mehrere oder alle Pumpen in der Anlage und ggf. weitere Anlagenbauteile wie Ventile etc. übernehmen kann. D.h. die Haupt-Pumpe ersetzt die bislang erforderliche separate Steuereinrichtung.

Erfindungsgemäß bildet das beschriebene Umwälzpumpenaggregat eine Haupt-Pumpe, welche über die Kommunikationsschnittstelle zur Datenübertragung mit zumindest einer Neben-Pumpe verbunden ist, wobei die Kommunikationsschnittstelle der Haupt-Pumpe zum Empfang von Daten der Neben-Pumpe ausgebildet ist und die Steuereinrichtung der Haupt-Pumpe ausgebildet ist, die Haupt-Pumpe in Abhängigkeit der empfangenen Daten zu steuern. So dienen die Neben-Pumpen gleichzeitig als Sensoren und senden bestimmte Anlagenparameter an die Haupt-Pumpe, sodass die Haupt-Pumpe von deren Steuereinrichtung dann in Abhängigkeit der Anlagenparameter gesteuert wird. Die Steuereinrichtung der Haupt-Pumpe kann gleichzeitig auch weitere Anlagenkomponenten, d.h. beispielsweise weitere Pumpen oder beispielsweise Ventile in Abhängigkeit dieser Parameter, welche sie von den Neben-Pumpen empfangen hat, steuern. Insbesondere können die Neben-Pumpen an die zentrale Steuereinrichtung der Haupt-Pumpe auch Rückmeldungen, beispielsweise über den aktuellen Förderstrom o. ä. geben. Auch könnten Fehler auf diese Weise an die zentrale Steuereinrichtung, welche die Steuereinrichtung der Haupt-Pumpe bildet, übertragen werden. Dort können sie dann an einer zentralen Anzeigeeinrichtung, welche an dem Umwälzpumpenaggregat, welches die Haupt-Pumpe bildet, vorgesehen ist, zur Anzeige gebracht werden. Auch wäre es denkbar, weitere Anzeige- oder Steuersysteme mit dieser Haupt-Pumpe zu verbinden, sodass etwaige Fehler über ein geeignetes Netzwerk beispielsweise an eine zentrale Haussteuerung weitergemeldet werden können.

Auch kann die Haupt-Pumpe interne Sensoren aufweisen, welche ihre Signale an die Steuereinrichtung übertragen.

Gemäß einer weiteren bevorzugten Ausführungsform ist die Steuereinrichtung der Umwälzpumpe, d.h. im Falle mehrerer Pumpen der Haupt-Pumpe über das Kommunikationsmodul mit zwei Temperatursensoren verbunden, einer an einem Solarkollektor und ein zweiter Temperatursensor an einem Wasserspeicher. Die Steuereinrichtung ist dann so ausgebildet, dass sie die Umwälzpumpe, d.h, deren Antriebsmotor startet, wenn die von den Temperatursensor an dem Solarkollektor erfasste Temperatur um einen vorbestimmten Wert über der von dem Sensor an dem Wasserspeicher erfassten Temperatur liegt. Entsprechend ist die Steuereinrichtung auch so ausgebildet, dass sie den Antriebsmotor der Umwälzpumpe abschaltet, wenn die Temperatur, welche an dem Wasserspeicher erfasst wird, die Temperatur, welche an dem Solarkollektor erfasst wird, um einen vorbestimmten Wert übersteigt. In diesem Zusammenhang-ist zu verstehen, dass wenn von Wasserspeicher die Rede ist, damit auch ein Speicher eines anderen Heizmediums gemeint sein kann, je nachdem was für ein Fluid zum Wärmetransport in der Heizungsanlage verwendet wird.

Nachfolgend wird die Erfindung beispielhaft anhand der beigefügten Figuren beschrieben. In diesen zeigt:
- Fig. 1: eine schematische Ansicht eines erfindungsgemäßen Pumpenaggregates und
- Fig. 2: schematisch den Aufbau einer erfindungsgemäßen Heizungsanlage.

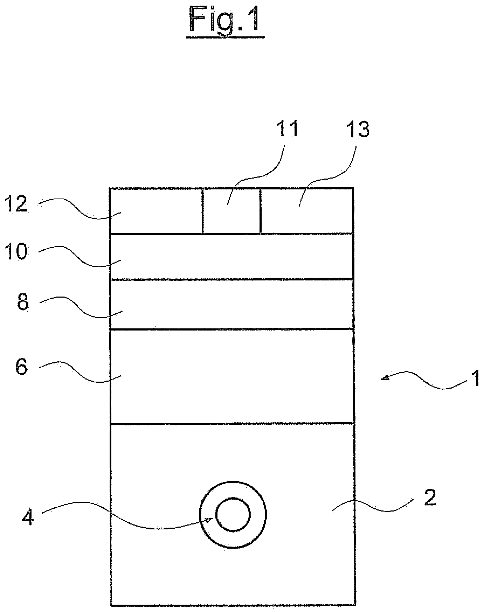

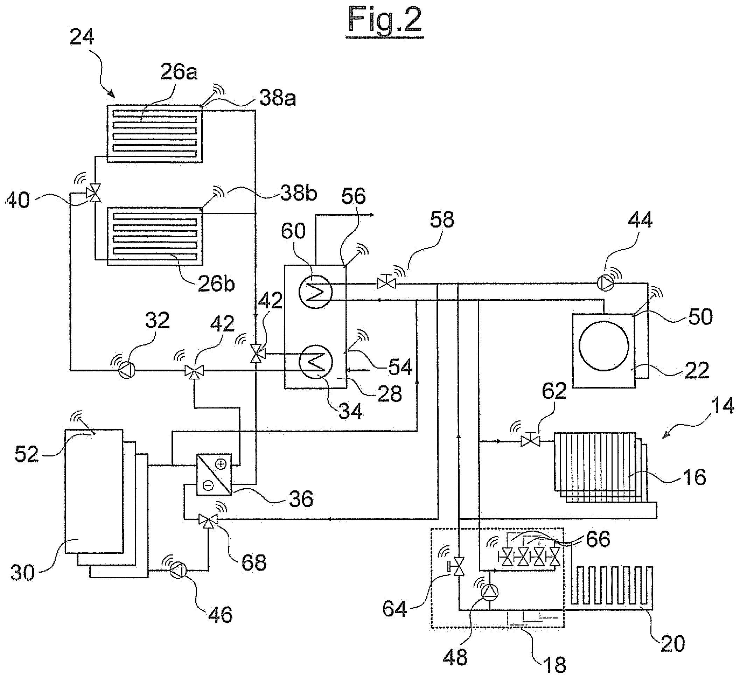

Fig. 1 zeigt schematisch die wesentlichen Komponenten eines erfindungsgemäßen Umwälzpumpen- bzw. Pumpenaggregates 1, Das gezeigte Pumpenaggregat weist in bekannter Weise ein Pumpengehäuse 2 mit einem Einlass 4 und einem hier nicht gezeigten Auslass auf. Ferner ist an dem Pumpengehäuse 2 oder in dem Pumpengehäuse 2 ein Antriebsmotor 6 angeordnet, welcher in diesem Fall über einen Frequenzumrichter 8 angesteuert wird, um die Drehzahl des Antriebsmotors 6 einstellen zu können. Ferner ist ein Softwaremodul 10 vorgesehen, welches die übliche Steuerung der Pumpe, beispielsweise Drehzahlsteuerung oder Drehzahlregelung vornimmt. D.h., das Softwaremodul 10, welches für den Programmablauf der Software geeignete Hardwarekomponenten aufweist, dient der üblichen Steuerung des Antriebsmotors 6. Das erfindungsgemäße Umwälzpumpenaggregat 2 weist darüber hinaus eine Steuereinrichtung in Form eines Steuermoduls 12 auf, welches in einem Pumpen- bzw. Heizungssystem eine zentrale Steuerfunktion für mehrere Komponente übernehmen kann, wie es beispielhaft anhand von Fig. 2 erläutert wird.

Das Pumpenaggregat 1 kann darüber hinaus noch interne Sensoren aufweisen, beispielsweise Druck- oder Temperaturfühler, welche ihre Ausgangsdaten an das Softwaremodul 10 und/oder das Steuermodul 12 weiterleiten, sodass diese den Antriebsmotor 6 und/oder ggf. weitere Komponenten der Heizungsanlage in Abhängigkeit der Daten der internen Sensoren steuern können. Ferner können das Softwaremodul 10 oder das Steuermodul 12 Schnittstellen zur Datenkommunikation mit einer Programmiereinrichtung, beispielsweise in Form eines Computers aufweisen. Hierzu kann beispielsweise ein Netzwerkanschluss oder ein USB-Anschluss vorgesehen sein. Dies ermöglicht es, das Steuermodul oder auch das Softwaremodul von außen mittels eines Computers einstellen bzw, programmieren zu können. Darüber hinaus wäre auch eine Vernetzung mit einer Gebäudeleittechnik denkbar.

Das Steuermodul 12 weist ein Kommunikationsmodul 13, d.h. eine Kommunikationsschnittstelle zur Kommunikation mit weiteren Aggregaten oder Sensoren in der Heizungsanlage auf. Darüber hinaus ist im hier gezeigten Beispiel ein Repeater 11 in das Pumpenaggregat 1 integriert, welcher dazu dient über Funk empfangene Signale an andere Anlagenteile bzw. Aggregate weiterzuleiten.

Fig. 2 zeigt beispielhaft eine Heizungsanlage mit mehreren Heizkreisen. Dies ist zum einen ein Heizkreis 14 mit normalen Heizkörpern 16 und zum anderen eine Fußbodenheizung 18 mit wiederum mehreren Heizkreisen 20. Für die Wärmeerzeugung sind ein Heizkessel 22 und eine Solaranlage 24 mit hier zwei Solarkollektoren 26a und 26b vorgesehen. Ferner ist ein Brauchwasserspeicher 28 zur Erwärmung von Brauchwasser vorgesehen. Darüber hinaus weist die Anlage noch einen externen Wasserspeicher 30 zur Speicherung erwärmten Wassers des Heizungskreislaufes auf. Der Wasserspeicher 30 dient dazu, überschüssige Wärme, welche von den Solarkollektoren 26a und 26b erzeugt wird, speichern zu können.

Die gesamte Anlage weist zur Steuerung zahlreiche Ventile, Sensoren und Pumpen auf, welche nachfolgend näher beschrieben werden. Bei diesem Ausführungsbeispiel sind diese Pumpen, Sensoren und Ventile drahtlos miteinander vernetzt, d.h. sie kommunizieren untereinander über Funk. Dies ermöglicht eine sehr einfache Installation der Anlage, da der Verdrahtungsaufwand für Steuerleitungen entfällt. Die einzelnen Module müssen lediglich eine Energieversorgung aufweisen, welche durch einfachen Netzanschluss oder insbesondere im Fall von Sensoren auch anderweitig erfolgen kann, beispielsweise über Solarzellen oder Batterien.

In dieser Anlage ist eine erste Umwälzpumpe bzw. ein erstes Umwälzpumpenaggregat 32 vorgesehen, welches eine Haupt- oder Master-Pumpe 32 bildet. Diese Haupt-Pumpe 32 entspricht dem anhand von Fig. 1 erläuterten Umwälzpumpenaggregat 1 und ist im Kreis der Solaranlage 24 angeordnet und fördert das Wasser in dem Kreislauf der Solaranlage 24 durch die Solarkollektoren 26a und 26b wahlweise zu einem Wärmetauscher 34 in dem Brauchwasserspeicher 28 oder einem Wärmetauscher 36, welcher die Schnittstelle zu dem übrigen Heizungskreislauf bildet. In dem Kreis der Solaranlage 24 sind darüber hinaus zwei Temperatursensoren 38a und 38b an bzw. in den Solarkollektoren 26a und 26b vorgesehen. Darüber hinaus sind in dem Kreis der Solaranlage 24 drei Ventile 40, 42 vorgesehen. Das Ventil 40 dient dazu, die beiden Solarkollektoren 26a, 26b wahlweise dem Kreis zuschalten zu können. Die Ventile 42 dienen dazu, um das in dem Solarkreis 24 von dem Solarkollektoren 26a und/oder 26b erwärmte Wasser wahlweise dem Wärmetauscher 34 und/oder dem Wärmetauscher 36 zuführen zu können. Die Temperatursensoren 38a, 38b sowie die Ventile 40 und 42 sind mit Schnittstellen zur Funkkommunikation ausgerüstet, wie auch in der Haupt-Pumpe 32 ein Kommunikationsmodul zur Funkkommunikation mit den zuvor genannten Komponenten vorgesehen ist. So kann die Haupt-Pumpe 32 von den Temperatursensoren 38a und 38b Temperaturwerte über Funk empfangen. Ferner kann die Hauptpumpe 32 bzw. deren Steuermodul 12 über das Kommunikationsmodul 13 über Funk die Ventile 40 und 42 steuern bzw. betätigen.

In der übrigen Heizungsanlage sind weitere Pumpen vorgesehen, welche Neben-Pumpen bilden. Dies ist zum einen die Pumpe 44, welche im Kreis des Heizkessels 22 gelegen ist und das von dem Heizkessel 22 erwärmte Wasser fördert. Zum anderen ist dies die Pumpe 46, welche im Kreis des Wasserspeichers 30 gelegen ist und insbesondere das Wasser durch den Wasserspeicher 30 und den Wärmetauscher 36 fördern kann. Als dritte Pumpe ist noch eine Pumpe 48 im Kreis der Fußbodenheizung 18 vorgesehen. Diese Pumpe übernimmt Mischerfunktionen in dem Kreis der Fußbodenheizung. Darüber hinaus sind weitere Temperatursensoren vorgesehen, nämlich ein Temperatursensor 50 in dem Heizkessel 22 bzw. dessen Wasserkreislauf, ein Temperatursensor 52 in dem externen Wasserspeicher 30 und zwei Temperatursensoren 54 und 56 in dem Brauchwasserspeicher 28. Dabei sind der Temperatursensor 54 unten und der Temperatursensor 56 oben in dem Brauchwasserspeicher 28 angeordnet.

Darüber hinaus sind weitere Ventile in der Anlage vorgesehen, nämlich ein Ventil 58, in dem zu dem Wärmetauscher 60 führenden Zweig des Heizungskreislaufes. Der Wärmetauscher 60 ist ebenfalls in dem Brauchwasserspeicher 28 zur Erwärmung des Brauchwassers alternativ zu der Erwärmung durch den Wärmetauscher 34 vorgesehen. Ein weiteres Ventil 62 ist dem Heizkreis 14 vorgesehen. Auch in dem Kreis der Fußbodenheizung 18 ist ein Ventil 64 vorgesehen. Darüber hinaus sind weitere Einzylinderventile 66 für die einzelnen Kreise 20 der Fußbodenheizung 18 vorgesehen. Schließlich ist noch ein Ventil 68 im Kreis des Wasserspeichers 30 vorgesehen, mit welchem ein Umschalten des Kreises des Wasserspeichers 30 von einem Kreislauf durch den Wärmetauscher 36 zu einer Verbindung mit dem Gesamtheizkreislauf möglich ist,

Alle die vorgenannten Temperatursensoren 50, 52, 54, 56 und Ventile 58, 62, 64, 66 und 68 weisen Kommunikationsschnittstellen zur drahtlosen Kommunikation untereinander und insbesondere mit der Kommunikationsschnittstelle bzw. dem Kommunikationsmodul 13 der Haupt-Pumpe 32 auf. Die Schnittstellen bzw. Kommunikationsschnittstellen können darüber hinaus Repeater beinhalten, um Funksignale empfangen und weiter übertragen zu können, sodass das System mit geringer Sendeleistung der einzelnen Module auch über größere Reichweiten beispielsweise in größeren Gebäuden funktionieren kann. Die einzelnen Anlageteile sind ggf, räumlich weit voneinander getrennt, beispielsweise die Solarkollektoren 26a und 26b auf dem Dach und die übrigen Heizungsaggregate im Keller, die Heizkörper 16 und die Fußbodenheizung 18 in verschiedenen Räumen des Gebäudes.

Bei der gezeigten Anlage übernimmt die Haupt-Pumpe 32 die Steuerung des Gesamtsystems, d.h. sie steuert die anderen Pumpen 44, 46 und 48 sowie die Ventile 40, 42, 58, 62, 64, 66 und 68. Dazu verarbeitet sie Signale bzw. Daten, die sie per Funk von den Temperatursensoren 38a, 38b, 50, 52, 54 und 56 erhält. Darüber hinaus können auch die weiteren Pumpen und Ventile noch Sensoren beinhalten, welche ihre Daten zu dem Steuermodul 12 der Haupt-Pumpe 32 per Funk übertragen. So kann zwischen den einzelnen Elementen jeweils eine bidirektionale, in diesem Fall drahtlose Kommunikation vorgesehen sein.

Nachfolgend werden nun wichtige Betriebsfunktionen der Anlage beispielhaft beschrieben- Dabei bildet das Steuermodul 12 der Haupt-pumpe 32 eine zentrale Steuereinheit, welche das Gesamtsystem steuert. So kann das Steuermodul 12 der Haupt-Pumpe 32 das Ventil 40 steuern, um festzulegen, welcher der Solarkollektoren 26a, 26b Wärme in den Kreislauf liefert. So können die Solarkollektoren abwechselnd betrieben werden oder auch gleichzeitig betrieben werden. Die Solarkollektoren 26a und 26b können beispielsweise in unterschiedlichen Himmelsrichtungen ausgerichtet sein, beispielsweise der Solarkollektor 26a nach Süden und der Solarkollektor 26b nach Südwest. Je nach Tageszeit und Sonnenstand kann dann der eine oder der andere Solarkollektor genutzt werden. Für diese Steuerung erhält die Haupt-Pumpe 32 Temperatursignale von den Temperatursensoren 38a und 38b, welche die Temperatur der Solarkollektoren 26a bzw. 26b, d.h. des Fluids in diesen Kollektoren erfassen, So kann der Kollektor, welcher die gewünschte Sollwärme aufweist, der Heizung zugeschaltet werden und ein Kollektor, welcher eine zu niedrige Temperatur aufweist, abgeschaltet werden. Wenn die Sensoren 38a und 38b beide zu niedrige Temperaturen signalisieren, kann darüber hinaus das Steuermodul 12 der Haupt-Pumpe 32 auch die Haupt-Pumpe 32 selber abschalten, sodass kein Wasser bzw. Heizmedium mehr durch den Kreis der Solaranlage 24 gefördert wird.

Über die Ventile 42, welche ebenfalls von dem Steuermodul 12 der Haupt-Pumpe 32 gesteuert werden, wird festgelegt, ob das von dem Solarkollektoren 26a, 26b erwärmte Wasser zu dem Wärmetauscher 34 des Brauchwasserspeichers 28 gefördert wird oder zu dem Wärmetauscher 36, über welchen das Wasser in dem Wasserspeicher 30 erwärmt werden kann. Grundlage dieser Steuerung sind die Ausgangssignale der Temperatursensoren 54, 56 und 52. Wenn die Temperatur in dem Brauchwasserspeicher 28 unter einen bestimmten Wert fällt, wird dies von dem Steuermodul 12 der Haupt-Pumpe 32 erfasst, welches dann die Ventile 42 entsprechend schaltet, sodass von der Solaranlage erwärmtes Wasser in den Wärmetauscher 34 strömt und das Brauchwasser in dem Brauchwasserspeicher 28 erwärmt. Dabei kann durch die zwei Temperatursensoren 54 und 56 erfasst werden, ob nur ein Teil des Brauchwassers, nämlich nur der obere Teil erwärmt ist oder das Wasser in dem gesamten Brauchwasserspeicher 28 die gewünschte Temperatur hat. Entsprechend können, wenn der von dem Temperatursensor 52 erfasste Temperaturwert einen Sollwert unterschreitet von dem Steuermodul 12 in der Haupt-Pumpe 32 die Ventile 42 so eingestellt werden, dass das von der Solaranlage 24 erwärmte Wasser durch den Wärmetauscher 36 strömt, um das Wasser in dem Wasserspeicher 30 auf die gewünschte Solltemperatur zu bringen. Entsprechend kann das Steuermodul 12 der Haupt-Pumpe 32 die Ventile 42 dann auch wieder so schalten, um die Erwärmung des Brauchwassers in dem Brauchwasserspeicher 28 oder des Wassers in dem Wasserspeicher 30 abzuschalten, wenn die zugehörigen Temperatursensoren 56, 54 bzw, 52 eine gewünschte Solltemperatur über Funk signalisieren.

Die Neben-Pumpe 46 sowie das Ventil 68, welche ebenfalls von dem Steuermodul 12 der Haupt-Pumpe 32 gesteuert werden, dienen dazu, die Erwärmung des Wassers in dem Wasserspeicher 30 sowie die Wärmeentnahme aus dem Wasserspeicher 30 zu steuern. So kann das Ventil 68 so geschaltet werden, dass das Wasser von der Pumpe 46 nur durch den Wärmetauscher 36 gefördert wird. Dabei wird der Wasserspeicher 30 geladen, d.h. das Wasser darin über die Solaranlage 24 erwärmt. Um die Wärme zu entnehmen, wird das Ventil 68 umgeschaltet, sodass die Pumpe 46 warmes Wasser aus dem Wasserspeicher 30 zu dem Wärmetauscher 60 in dem Brauchwasserspeicher 28 fördert, um dort das Wasser zu erwärmen. Diese Steuerung erfolgt ebenfalls auf Grundlage der von den Temperatursensoren 52, 54 und 56 ausgesendeten Signalen. Wenn die Werte der Temperatursensoren 54 und 56 eine gewisse Solltemperatur unterschreiten und gleichzeitig die Temperatursensoren 38a und 38b signalisieren, dass die Temperatur in den Solarkollektoren 26a und 26b zur Erwärmung des Brauchwassers 28 nicht ausreicht, wird das Steuermodul 12 der Haupt-Pumpe 32 das Ventil 68 so schalten und die Neben-Pumpe 46 in Betrieb nehmen, dass in dem Wasserspeicher 30 gespeichertes warmes Wasser in den Wärmetauscher 60 zur Erwärmung des Brauchwassers in dem Brauchwasserspeicher 28 geleitet wird. Wenn die Temperatur des Wassers in dem Wasserspeicher 30, was der Haupt-Pumpe 32 über den Temperatursensor 52 signalisiert wird, ebenfalls nicht ausreicht, kann zusätzlich die Pumpe 44 veranlasst werden, von dem Heizkessel 22 erwärmtes Wasser zu dem Wärmetauscher 60 zu fördern.

Das Ventil 58 dient dazu, den Wärmetauscher 60 vom Heizkreislauf abkoppeln zu können, wenn warmes Wasser aus dem Wasserspeicher 30 dazu genutzt werden soll, den Heizkreis 14 oder die Fußbodenheizung 18 mit Wärme zu versorgen. Dann wird das erwärmte Wasser aus dem Wasserspeicher 30 von der Pumpe 46 bei entsprechender Stellung des Ventils 58 zu dem Heizkreis 14 und der Fußbodenheizung 18 gefördert. Wenn das Ventil 58 dabei geschlossen ist, kann das Wasser nicht in den Wärmetauscher 60 strömen. Auch das Ventil 58 wird von dem Steuermodul 12 in der Haupt-Pumpe 32 betätigt. Die Betätigung erfolgt dabei ebenfalls in Abhängigkeit der von den Temperatursensoren 54 und 56 ausgesendeten Temperatursignale.

Ober die Ventile 62 und 64 können der Heizkreis 14 und die Fußbodenheizung 18 zu- oder abgeschaltet werden. Auch diese Ventile können von der Haupt-Pumpe 32 über Funk betätigt werden, wobei diese Betätigung auf Grundlage weiterer Temperaturdaten, welche von zusätzlichen Temperaturfühlern erfasst werden, erfolgen kann. So können die Temperaturen im Heizkreis 14 bzw. im Kreislauf der Fußbodenheizung 18 erfasst werden und in Abhängigkeit von dort zu erzielenden Solltemperaturen die Ventile 62 und 64 geöffnet oder geschlossen werden. Entsprechendes gilt für die Steuerung der Pumpe 48, welche ebenfalls als Neben-Pumpe von der Haupt-Pumpe 32 ein- und ausgeschaltet sowie ggf. in ihrer Drehzahl gesteuert werden kann. Auch die Pumpen 44 und 46 können je nach Ausgestaltung von der Haupt-Pumpe 32 entweder lediglich ein- oder ausgeschaltet oder aber auch in ihrer Förderleistung durch Drehzahlanpassung gesteuert werden. Auch die Steuerung der Ventile 66 für die einzelnen Kreise 20 der Fußbodenheizung kann von der Steuereinrichtung in der Haupt-Pumpe 32 übernommen werden in Abhängigkeit der Ausgangssignale von weiteren Temperaturfühlern, beispielsweise Raumtemperaturfühlern in den jeweiligen von den Heizkreisen 20 zu beheizenden Räume.

So ist zu erkennen, dass die Haupt-Pumpe 32 bzw, deren Steuermodul 12 die gesamte Pumpen- und Ventilsteuerung in der Heizungsanlage übemehmen kann, Die gesamte Kommunikation, d.h. der Austausch von Sensorsignalen und Steuersignalen bzw, -daten erfolgt dabei über entsprechende Kommunikationsschnittstellen bzw. Kommunikationsmodule in den jeweiligen Bauteilen, d.h. Sensoren, Ventilen oder Pumpen, im gezeigten Beispiel über Funk.

Im gezeigten Ausführungsbeispiel wurden die Funktion des erfindungsgemäßen Umwälzpumpenaggregates und die Kommunikation mit weiteren Anlagenkomponenten am Beispiel einer Heizungsanlage beschrieben. Es ist jedoch zu verstehen, dass eine entsprechende Funktion auch in einer Klimaanlage gegeben sein könnte.

### Bezugszeichenliste

- 1: - Pumpenaggregat
- 2: - Pumpengehäuse
- 4: - Einlass
- 6: - Antriebsmotor
- 8: - Frequenzumrichter
- 10: - Softwaremodul
- 12: - Steuermodul
- 13: - Kommunikationsmodul
- 14: - Heizkreis
- 16: - Heizkörper
- 18: - Fußbodenheizung
- 20: - Heizkreise der Fußbodenheizung
- 22: - Heizkessel
- 24: - Solaranlage
- 26a, 26b: - Solarkollektoren
- 28: - Brauchwasserspeicher
- 30: - Wasserspeicher
- 31: - Haupt-Pumpe
- 34, 36: - Wärmetauscher
- 38a, 38b: - Temperatursensoren
- 40, 42: - Ventile
- 44, 46, 48: - Pumpen
- 50, 52, 54, 56: - Temperatursensoren
- 58: - Ventil
- 60: - Wärmetauscher
- 62, 64, 66, 68: - Ventile

## Patentansprüche

1. Heizungs- und/oder Klimaanlage, welche zumindest ein Umwälzpumpenaggregat (1) mit einem elektrischen Antriebsmotor (6) und einer Steuereinrichtung (10, 12) zum Steuern des Antriebsmotors (6) aufweist, wobei
die Steuereinrichtung (12) eine Kommunikationsschnittstelle (13) aufweist, welche zur Verbindung mit zumindest einem externen Sensor (38, 50, 52, 54, 56) und/oder zumindest einem weiteren von der Steuereinrichtung zu steuernden Aggregat (40, 42, 44, 46, 48, 58, 62, 64, 66, 68) ausgebildet ist, wobei das Umwälzpumpenaggregat eine Haupt-Pumpe (32) bildet, welche über die Kommunikationsschnittstelle (13) zur Datenübertragung mit zumindest einer Neben-Pumpe (44, 46, 48) verbunden ist, **dadurch gekennzeichnet, dass** die Kommunikationsschnittstelle (13) der Haupt-Pumpe (32) zum Empfang von Daten von der Neben-Pumpe (44, 46, 48) ausgebildet ist, wobei die Nebenpumpe als Sensor dient, und die Steuereinrichtung (10, 12) der Haupt-Pumpe (32) ausgebildet ist, die Haupt-Pumpe (33) in Abhängigkeit der empfangenen Daten zu steuern.

2. Heizungs- und/oder Klimaanlage nach Anspruch 1, **dadurch gekennzeichnet, dass** die Kommunikationsschnittstelle (13) zur drahtlosen Signalübertragung, insbesondere mittels Funk ausgebildet ist.

3. Heizungs- und/oder Klimaanlage nach Anspruch 1 oder 2, **dadurch gekennzeichnet, dass** die Steuereinrichtung (10, 12) derart ausgebildet ist, dass der Antriebsmotor (6) von der Steuereinrichtung (10, 12) in Abhängigkeit von über die Kommunikationsschnittstelle (13) empfangenen Daten steuerbar ist.

4. Heizungs- und/oder Klimaanlage nach einem der vorangehenden Ansprüche, **dadurch gekennzeichnet, dass** die Steuereinrichtung (12) derart ausgebildet ist, dass sie über die Kommunikationsschnittstelle (13) Daten an ein externes Aggregat (40, 42, 44, 46, 48, 58, 62, 64, 66, 68) senden kann, welches in Abhängigkeit dieser Daten gesteuert wird.

5. Heizungs- und/oder Klimaanlage nach einem der vorangehenden Ansprüche, **dadurch gekennzeichnet, dass** die Steuereinrichtung (12) derart ausgebildet ist, dass sie über die Kommunikationsschnittstelle (13) zumindest eine weitere Pumpe (44, 46, 48) und/oder ein externes Ventil (40, 42, 58, 62, 64, 66, 68) steuern kann und/oder Daten von diesen empfangen kann.

6. Heizungs- und/oder Klimaanlage nach einem der vorangehenden Ansprüche, **dadurch gekennzeichnet, dass** die Steuereinrichtung (12) einen Repeater (11) zum Empfang und zum Weitersenden von Signalen aufweist.

7. Heizungs- und/oder Klimaanlage nach einem der vorangehenden Ansprüche, **dadurch gekennzeichnet, dass** die Steuereinrichtung (12) aus zumindest einem austauschbar oder optional in das Umwälzpumpenaggregat (1) integrierbaren Modul gebildet ist.

8. Heizungs- und/oder Klimaanlage nach einem der vorangehenden Ansprüche, **dadurch gekennzeichnet, dass** zumindest ein Sensor, insbesondere ein Temperatursensor (38, 50, 52, 54, 56) vorgesehen ist, welcher mit der Kommunikationsschnittstelle (13) des Umwälzpumpenaggregates (1, 32) zur Datenübertragung verbunden ist, und der Antriebsmotor (6) des Umwälzpumpenaggregates (1, 32) von deren Steuereinrichtung (10) in Abhängigkeit der von dem Sensor (38, 50, 52, 54, 56) übertragenen Daten steuerbar ist.

9. Heizungs- und/oder Klimaanlage nach Anspruch 8, **dadurch gekennzeichnet, dass** ein solcher Temperatursensor (38) an zumindest einem Solarkollektor (26) und/oder an einem Wasserspeicher (28, 30, 52, 54, 56) angeordnet ist.

10. Heizungs- und/oder Klimaanlage nach einem der vorangehenden Ansprüche, bei welcher die Kommunikationsschnittstelle (13) des Umwälzpumpenaggregates (1, 32) zur drahtlosen Signalübertragung ausgebildet ist und die Sensoren (38, 50, 52, 54, 56) und/oder Aggregate (40, 42, 44, 46, 48, 58, 62, 64, 66, 68), welche zur Kommunikation mit der Kommunikationsschnittstelle (13) vorgesehen sind, mit korrespondierenden Schnittstellen zur drahtlosen Signalübertragung ausgestattet sind.

11. Heizungs- und/oder Klimaanlage nach Anspruch 10, **dadurch gekennzeichnet, dass** zumindest ein Teil der Sensoren (38, 50, 52, 54, 56) und/oder Aggregate (40, 42, 44, 46, 48, 58, 62, 64, 66, 68) jeweils mit einem Repeater (11) zum Empfang und zum Weitersenden von Signalen ausgestattet ist.

12. Heizungs- und/oder Klimaanlage nach einem der vorangehenden Ansprüche, **dadurch gekennzeichnet, dass** das Umwälzpumpenaggregat (1, 32) eine Haupt-Pumpe (32) bildet, welche über die Kommunikationsschnittstelle (13) mit zumindest einer Neben-Pumpe (44, 46, 48) zur Datenübertragung verbunden ist, wobei die Neben-Pumpe (44, 46, 48) eine Steuereinrichtung aufweist, welche zur Steuerung der Neben-Pumpe in Abhängigkeit von Daten ausgebildet ist, welche sie von der Haupt-Pumpe (32) empfängt.

## Claims

1. A heating installation and/or air conditioning installation which comprises at least a circulation pump assembly (1) with an electric drive motor (6) and with a control device (10, 12) for the control of the drive motor (6), wherein the control device (12) comprises a communication interface (13) which is designed for connection to at least one external sensor (38, 50, 52, 54, 56) and/or to at least one further assembly (40, 42, 44, 46, 48, 58, 62, 64, 66, 68) to be controlled by the control device, wherein the circulation pump assembly forms a main pump (32), which via the communication interface (13) is connected to at least one auxiliary pump (44, 46, 48) for data transmission, **characterised in that** the communication interface (13) of the main pump (32) is designed for receiving data from the auxiliary pump (44, 46, 48), whereby the auxiliary pump serves as a sensor and the control device (10, 12) of the main pump is designed to control the main pump (33) in dependence of the received data.

2. A heating installation and/or air conditioning installation according to claim 1, **characterised in that** the communication interface (13) is designed for wireless signal transmission, in particular by way of radio.

3. A heating installation and/or air conditioning installation according to claim 1 or 2, **characterised in that** the control device (10, 12) is designed in a manner such that the drive motor (6) may be controlled by the control device (10, 12) in dependence on data received via the communication interface (13).

4. A heating installation and/or air conditioning installation according to one of the preceding claims, **characterised in that** the control device (12) is designed in a manner such that it may send data via the communication interface (13) to an external assembly (40, 42, 44, 46, 48, 58, 62, 64, 66, 68), which is controlled in dependence of this data.

5. A heating installation and/or air conditioning installation according to one of the preceding claims, **characterised in that** the control device (12) is designed in a manner such that via the communication interface (13), it may control at least one further pump (44, 46, 48) and/or an external valve (40, 42, 58, 62, 64, 66, 68) and/or receive data from these.

6. A heating installation and/or air conditioning installation according to one of the preceding claims, **characterised in that** the control device (12) comprises a repeater (11) for the receiving and transmitting signals.

7. A heating installation and/or air conditioning installation according to one of the preceding claims, **characterised in that** the control device (12) is formed of at least one module which may be integrated into the circulation pump assembly (1) in an exchangeable or optional manner.

8. A heating installation and/or air conditioning installation according to one of the preceding claims, **characterised in that** at least one sensor, in particular a temperature sensor (38, 50, 52, 54, 56) is provided, which is connected to the communication interface (13) of the circulation pump assembly (1, 32) for data transmission, and the drive motor (6) of the circulation pump assembly (1, 32) may be controlled by its control device (10) in dependence on the data transmitted by the sensor (38, 50, 52, 54, 56).

9. A heating installation and/or air conditioning installation according to claim 8, **characterised in that** such a temperature sensor (38) is arranged on at least one solar collector (26) and/or on a water storage device (28, 30, 52, 54, 56).

10. A heating installation and/or air conditioning installation according to one of the preceding claims, with which the communication interface (13) of the circulation pump assembly (1, 32) is designed for wireless signal transmission, and the sensors (38, 50, 52, 54, 56) and/or assemblies (40, 42, 44, 46, 48, 58, 62, 64, 66, 68) which are provided for communication with the communication interface (13), are equipped with corresponding interfaces for the wireless signal transmission.

11. A heating installation and/or air conditioning installation according to claim 10, **characterised in that** at least a part of the sensors (38, 50, 52, 54, 56) and/or assemblies (40, 42, 44, 46, 48, 58, 62, 64, 66, 68) is in each case equipped with a repeater (11) for receiving and for the transmission of signals.

12. A heating installation and/or air conditioning installation according to one of the preceding claims, **characterised in that** the circulation pump assembly (1, 32) forms a main pump (32), which via the communication interface (13) for data transmission, is connected with at least one auxiliary pump (44, 46, 48), wherein the communication interface (13) of the main pump (32) is designed for receiving data from the auxiliary pump (44, 46, 48), and the control device (10, 12) of the main pump (32) is designed to control the main pump (33) in dependence on the received data.

## Revendications

1. Installation de chauffage et/ou de climatisation comprenant au moins un agrégat de pompe de recirculation (1) avec un moteur d'entraînement électrique (6) et un dispositif de commande (10, 12) pour commander le moteur d'entraînement (6),
le dispositif de commande (12) comprenant une interface de communication (13) qui est configurée pour la liaison avec au moins un capteur extérieur (38, 50, 52, 54, 56) et/ou au moins un autre agrégat (40, 42, 44, 46, 48, 58, 62, 64, 66, 68) à commander par le dispositif de commande,
l'agrégat de pompe de recirculation constituant une pompe principale (32) qui est reliée à au moins une pompe accessoire (44, 46, 48) pour la transmission de données via l'interface de communication (13),
**caractérisée en ce que**
l'interface de communication (13) de la pompe principale (32) est configurée pour la réception de données de la pompe accessoire (44, 46, 48), la pompe accessoire servant comme capteur et le dispositif de commande (10, 12) de la pompe principale (32) étant configuré pour commander la pompe (33) en fonction des données reçues.

2. Installation de chauffage et/ou de climatisation selon la revendication 1, **caractérisée en ce que** l'interface de communication (13) est configurée pour une transmission de signaux sans fil, notamment par radio.

3. Installation de chauffage et/ou de climatisation selon la revendication 1 ou 2, **caractérisée en ce que** le dispositif de commande (10, 12) est configuré de façon telle que le moteur d'entraînement (6) puisse être commandé par le dispositif de commande (10, 12) en fonction de données reçues via l'interface de communication (13).

4. Installation de chauffage et/ou de climatisation selon l'une des revendications précédentes, **caractérisée en ce que** le dispositif de commande (12) est configuré de façon telle qu'il puisse envoyer des données via l'interface de communication (13) à un agrégat externe (40, 42, 44, 46, 48, 58, 62, 64, 66, 68) qui est commandé en fonction de ces données.

5. Installation de chauffage et/ou de climatisation selon l'une des revendications précédentes, **caractérisée en ce que** le dispositif de commande (12) est configuré de façon telle qu'il puisse, via l'interface de communication (13), commander au moins une autre pompe (44, 46, 48) et/ou une valve externe (40, 42, 58, 62, 64, 66, 68) et/ou recevoir des données de celles-ci.

6. Installation de chauffage et/ou de climatisation selon l'une des revendications précédentes, **caractérisée en ce que** le dispositif de commande (12) comprend un répéteur (11) pour recevoir et pour retransmettre des signaux.

7. Installation de chauffage et/ou de climatisation selon l'une des revendications précédentes, **caractérisée en ce que** le dispositif de commande (12) est constitué d'au moins un module susceptible d'être échangé ou d'être intégré en option dans l'agrégat de pompe de recirculation (1).

8. Installation de chauffage et/ou de climatisation selon l'une des revendications précédentes, **caractérisée en ce qu'**il est prévu au moins un capteur, notamment un capteur de température (38, 50, 52, 54, 56), qui est relié, pour la transmission de données, à l'interface de communication (13) de l'agrégat de pompe de recirculation (1, 32) et que le moteur d'entraînement (6) de l'agrégat de pompe de recirculation (1, 32) est adapté pour être commandé par le dispositif de commande (10) en fonction des données transmises par le capteur (38, 50, 52, 54, 56).

9. Installation de chauffage et/ou de climatisation selon la revendication 8, **caractérisée en ce qu'**un tel capteur de température (38) est disposé sur au moins un collecteur solaire (26) et/ou sur un réservoir d'eau (28, 30, 52, 54, 56).

10. Installation de chauffage et/ou de climatisation selon l'une des revendications précédentes, **caractérisée en ce que** l'interface de communication (13) de l'agrégat de pompe de recirculation (1, 32) est configurée pour une transmission de signaux sans fil et que les capteurs (38, 50, 52, 54, 56) et/ou agrégats (40, 42, 44, 46, 48, 58, 62, 64, 66, 68) qui sont prévus pour la communication avec l'interface de communication (13), sont pourvus d'interfaces correspondants pour la transmission de signaux sans fil.

11. Installation de chauffage et/ou de climatisation selon la revendication 10, **caractérisée en ce qu'**au moins une partie des capteurs (38, 50, 52, 54, 56) et/ou agrégats (40, 42, 44, 46, 48, 58, 62, 64, 66, 68) sont pourvus, chacun, d'un répéteur (11) pour recevoir et pour retransmettre des signaux.

12. Installation de chauffage et/ou de climatisation selon l'une des revendications précédentes, **caractérisée en ce que** l'agrégat de pompe de recirculation (1, 32) constitue une pompe principale (32) qui est reliée à au moins une pompe accessoire (44, 46, 48), via l'interface de communication (13), pour la transmission de données, ladite pompe accessoire (44, 46, 48) comprenant un dispositif de commande qui est configuré pour commander la pompe accessoire en fonction de données qu'il reçoit de la pompe principale (32).
